# Europäisches Patentamt

# European Patent Office

# Office européen des brevets

(11) Publication number: **0 270 098 B1**

## EUROPEAN PATENT SPECIFICATION

(45) Date of publication of patent specification: **18.03.92**

(21) Application number: **87117838.0**

(22) Date of filing: **02.12.87**

(51) Int. Cl.⁵: **C04B 35/00**, C04B 35/46, H01B 3/12

(54) Process for manufacturing ceramics for use in electronic components.

(30) Priority: **04.12.86 JP 287728/86**

(43) Date of publication of application:
**08.06.88 Bulletin 88/23**

(45) Publication of the grant of the patent:
**18.03.92 Bulletin 92/12**

(84) Designated Contracting States:
**DE FR GB**

(56) References cited:
**EP-A- 0 038 044**
**EP-A- 0 153 412**
**EP-A- 0 157 276**

(73) Proprietor: **TAIYO YUDEN KABUSHIKI KAISHA
No. 16-20, Ueno 6-chome
Taito-ku Tokyo(JP)**

(72) Inventor: **Kishi, Hiroshi
No. 1203, Higashihirai
Fujioka-shi Gunma-ken(JP)**
Inventor: **Murai, Shunji
Taiyo-so, No 2-1-38 Nakaimachi
Takasaki-shi Gunma-ken(JP)**
Inventor: **Chazono, Hirokazu**

No. 780, Kenzakimachi
Takasaki-shi Gunma-ken(JP)
Inventor: **Fukui, Masami
No. 1062-2, Kamisatomi
Harunamachi Gunma-ken(JP)**
Inventor: **Yamaoka, Nobutatsu
No. 226-7, Nakasatomi
Harunamachi Gunma-ken(JP)**

(74) Representative: **Schmidt-Evers, Jürgen,
Dipl.-Ing. et al
Patentanwälte Dipl.-Ing. H. Mitscherlich
Dipl.-Ing. K. Gunschmann Dipl.-Ing.
Dr.rer.nat. W. Körber Dipl.-Ing. J. Schmidt-
Evers Dipl.-Ing. W. Melzer Steinsdorfstrasse
10
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# EP 0 270 098 B1

**Description**

Detailed Description of the Invention:

(Field of Industrial Applications)

This invention relates to a process for manufacturing ceramics for use in electronic components such as dielectric ceramics, semiconductor ceramics of grain boundary insulation type, and capacitative varistors.

(Prior Art)

With respect to ceramics for use in electronic components, an application for patent (1) concurrently filed with this application for patent on the present invention proposes a dielectric ceramic comprising a polycrystalline substance in which each of grains constituting the polycrystalline substance comprises a dielectric main phase and a composite phase being composed of a component of the main phase and a component other than that of the main phase, having dielectric characteristics different from those of the main phase and surrounding the main phase, and another application for patent (2) also concurrently filed with this application for patent on the present invention proposes a semiconductor ceramic of grain boundary insulation type comprising a polycrystalline substance in which each of grains constituting said polycrystalline substance comprises a semiconductive oxide main phase and a dielectric oxide composite phase surrounding said main phase and composed of a component of said main phase and a component other than that of said main phase.

(Problems to be Solved by the Invention)

The development of a convenient process is demanded with respect to the ceramics for use in electronic components as proposed in the above-mentioned applications for patent, i.e., ceramics for use in electronic components comprising grains each having a double phase structure composed of a main phase and a composite phase surrounding the main phase.

An object of the present invention is to provide a process for manufacturing ceramics for use in electronic components comprising grains each having the above-mentioned double phase structure which can attain the above-mentioned demand.

(Means to Solve the Problems)

The present invention relates to a process for manufacturing ceramics for use in electronic components comprising a polycrystalline substance in which each of grains constituting said polycrystalline substance comprises a main phase and a composite phase surrounding said main phase and composed of a component of said main phase and a component other than that of said main phase, which is characterized in that a metallic oxide powder is dispersed in a solution of a metal salt containing a metallic element component different from the component of said metallic oxide powder to deposit said metallic element component on the surface of said metallic oxide, and said metallic oxide having said metallic element component deposited on the surface thereof is then molded into a desired shape and thereafter fired.

(EXAMPLES)

The present invention will now be described by way of examples with reference to the accompanying drawings.

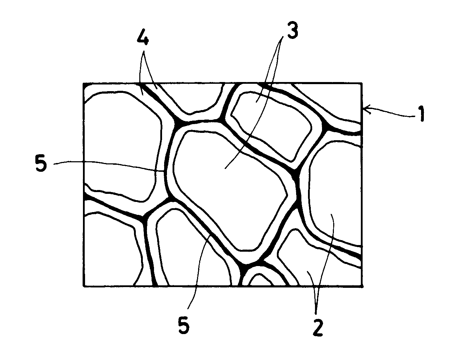

The drawing shows a schematic view of a crystalline structure of a ceramic for use in electronic components manufactured according to the process of the present invention. In the drawing, numeral 1 designates a polycrystal constituting a ceramic for use in electronic components. Each grain 2 comprises a main phase 3 and a composite phase 4 surrounding the main phase. The composite phase 4 comprises a metallic oxide in the form of a solid solution composed of a component of the main phase and a component other than that of the main phase. In the drawing, numeral 5 designates a grain boundary phase present between the grains 2.

In the case of the dielectric ceramic, the metallic phase of the main phase 3 comprises, e.g., a perovskite type oxide, $ABO_3$, such as $(Ba, Sr, Ca)(Ti, Zr)O_3$, $BaSnO_3$, $Pb(Co_{1/2}Nb_{1/2})O_3$, $Pb(Mn_{1/2}W_{1/2})O_3$ or $Ba(Mg_{1/3}Nb_{2/3})O_3$, a tungsten bronze type oxide, $AB_2O_6$, such as $CaNb_2O_6$ or $SrTa_2O_6$, a pyrochlore type

oxide, $A_2B_2O_7$, such as $Nd_2Ti_2O_7$ or $MgNb_2O_7$, a lamellar oxide such as $Sr_2Bi_4Ti_5O_{18}$ or $PbBi_2Nb_2O_9$, and an oxide of a single element, such as $TiO_2$, $SnO_2$ or $ZnO$. In the above-mentioned $ABO_3$ $AB_2O_6$, and $A_2B_2O_7$, A and B are each an element selected from among Mg, Ca, Sr, Ba, Ni, Cu, Zn, Pb, Bi, Ti, Zr, Nb, Ta, Cr, Mn, Fe, Co, Y, La, Ce, Pr, Nd, Sm, Dy, Aℓ, Si, W, Sn and Sb.

On the other hand, in the case of the semiconductor ceramic of grain boundary insulation type, the metallic oxide of the main phase 3 comprises, e.g., an oxide containing at least one element selected from among Mg, Ca, Sr, Ba, Ni, Cu, Zn, Pb and Bi, and at least one element selcted from among Ti, Zr, Nb, Ta, Cr, Mn, Fe, Co, Y, La, Ce, Pr, Nd, Sm, Dy, Aℓ, Si, W, Sn and Sb, e.g., a perovskite type semiconductive oxide such as $BaTiO_3$, $SrTiO_3$, $(Ba_{1-x}Sr_x)TiO_3$, $(Sr_{1-x}Ca_x)TiO_3$ or $(Ba_{1-x}Ca_x)TiO_3$ and an oxide of a single element, such as $TiO_2$, $SnO_2$ or $ZnO$.

With respect to the composite phase 4, the component other than that of the main phase 3 which constitutes the solid solution together with the component of the main phase 3 is selected from among Li, Na, K, Mg, Ca, Sr, Ba, Ni, Cu, Zn, Pb, Bi, Ti, etc.

The grain boundary phase 5 is present in the form of a glassy matrix composed of an element selected from among Li, Na, K, Si, Mn, Cu, Aℓ, B, Mg, Ca, Sr, Ba, Ni, Zn, etc.

A metallic oxide powder having a particle diameter of 0.1 to 10 $\mu$m is generally used as the raw material of the main phase 3.

Examples of the metal salt containing a metallic element component different from the component of the metallic oxide powder include inorganic salts such as chlorides, nitrates, etc. of Li, Na, K, Mg, Ca, Sr, Ba, Ni, Cu Zn, Pb, Ti, etc. and organic salts. They are used in the form of an aqueous solution or an organic solution thereof. The concentrations of these solutions are generally adjusted to about 0.1 to 10%.

The metallic oxide having a metal salt deposited on the surface thereof is obtained by either precipitating a solid component in a solution containing the metal salt and the metallic oxide each dispersed therein, or evaporating the solvent from the solution.

Subsequent steps such as molding and firing can be conducted in the same manner as those of the conventional process. Therefore, the description on these steps will be omitted in this specification.

More specific examples of the present invention will now be described together with comparative examples.

EXAMPLE 1

Equimolar amounts of barium carbonate ($BaCO_3$) having a purity of 99.4% and titanium oxide ($TiO_2$) having a purity of 99.7%, i.e., 569.9 g of $BaCO_3$ and 230.1 g of $TiO_2$, were weighed out and subjected to wet mixing in a ball mill for 15 hr. The resulting mixture was dried and calcined at 1200°C for 2 hr to obtain a barium titanate ($BaTiO_3$) powder having an average particle diameter of 2.3 $\mu$m.

Thereafter, 50 g of barium titanate $BaTiO_3$, 2.3 g of strontium nitrate [$Sr(NO_3)_2$], and 2.0 g of titanium oxynitrate [$TiO(NO_3)_2$] were weighed out so that the proportions of $Sr(NO_3)_2$ and $TiO(NO_3)_2$ were each 5 mol% based on 1 mol of $BaTiO_3$, and dissolved in 300 $cm^3$ of water to prepare an aqueous solution. The solution was subjected to wet mixing in a ball mill for 10 hr and then spray-dried with a spray drier. The powder thus obtained was observed with a scanning transmission electron microscope. As a result, it was found that fine particles having a diameter of about 0.01 $\mu$m were deposited around the $BaTiO_3$ powder. Thereafter, 5% by weight of a PVA binder was added to this powder. The resulting mixture was pressure-molded into a disk having a diameter of 20 mm⌀ and a thickness of 1 mm. The disk was then fired at 1350°C for 2 hr to obtain a sinter.

The sinter thus obtained was sliced and treated with an ion mill, followed by the examination of an elementary composition of the sinter with a scanning transmission electron microscope (STEM). As a result, it was found that the sinter comprised grains each composed of a main phase of $BiTiO_3$ and a composite phase composed of $(Ba, Sr)TiO_3$ and surrounding the main phase, and grain boundary phases present between these grains.

Then, both surfaces of the sinter were coated with a silver paste, followed by baking, thereby manufacturing a ceramic capacitor. The obtained capacitor was subjected to the measurement of specific inductive capacity, $\epsilon$s, dielectric loss, tan$\sigma$, and insulation resistance IR. The results are shown in the following table. Further, the ceramic capacitor was put in a thermostatic chamber, followed by examination of changes in the capacitance at a temperature ranging from -25°C to +85°C. The maximum values with respect to the plus side and minus side of the rate of change (%) according to JIS C 5102 are shown in the following table.

EXAMPLE 2

50 g of BaTiO$_3$ having an average particle diameter of 2.3 $\mu$m which had been prepared in the same manner as that of EXAMPLE 1, 2.9 g of strontium chloride (SrCl$_2$•6H$_2$O) and 2.0 g of titanium tetrachloride (TiCl$_4$) were weighed out so that the proportions of SrCl$_2$•6H$_2$O and TiCl$_4$ were each 5 mol% based on 1 mol of BaTiO$_3$, and dissolved in 300 cm$^3$ of water to prepare an aqueous solution. The aqueous solution was subjected to wet mixing in a ball mill for 10 hr. 5 mol of aqueous ammonia was added to the resulting mixture, thereby precipitating fine particles of strontium and titanium on the BaTiO$_3$ powder. Then, the precipitates were filtered and dried to obtain a powder.

The powder thus obtained was observed with a scanning transmission electron microscope. As a result, it was found that fine particles having a diameter of about 0.05 $\mu$m were deposited around the BaTiO$_3$ powder. Then, the powder was fired in the same manner as that of EXAMPLE 1 to obtain a sinter. An elementary composition of the sinter was examined in the same manner as that of EXAMPLE 1. As a result, it was found that the sinter comprised grains each composed of a main phase of BiTiO$_3$ and a composite phase composed of (Ba, Sr)TiO$_3$ and surrounding the main phase, and grain boundary phases present between these grains.

Thereafter, in the same manner as that of EXAMPLE 1, both surfaces of the sinter were coated with a silver paste, followed by baking, thereby preparing a ceramic capacitor. The obtained capacitor was subjected to the measurement of specific inductive capacity, $\epsilon$s, etc. The results are shown in the following table.

COMPARATIVE EXAMPLE 1

50 g of BaTiO$_3$ having an average particle diameter of 2.3 $\mu$m which had been prepared in the same manner as that of EXAMPLE 1, 1.6 g of strontium carbonate (SrCO$_3$) having an average particle diameter of 0.5 $\mu$m and 0.9 g of titanium oxide (TiO$_2$) were weighed out so that the proportions of SrCO$_3$ and TiO$_2$ were each 5 mol% based on 1 mol of BaTiO$_3$, and subjected to wet mixing in a ball mill for 15 hr, followed by drying to obtain a mixed powder. Then, the powder was fired in the same manner as that of EXAMPLE 1 to obtain a sinter. An elementary composition of the sinter was examined in the same manner as that of EXAMPLE 1. As a result, it was found that the sinter comprised grains each composed of only (Ba, Sr)TiO$_3$ in the form of a uniform solid solution comprising Ba, Sr, and Ti, and grain boundary phases present between these grains.

Thereafter, in the same manner as that of EXAMPLE 1, both surfaces of the sinter were coated with a silver paste, followed by baking, thereby preparing a ceramic capacitor. The obtained capacitor was subjected to the measurement of specific inductive capacity, $\epsilon$s, etc, The results are shown in the following table.

EXAMPLE 3

Zinc oxide (ZnO) having a purity of 99.9% was heat treated at 1250°C for 5 hr to obtain a semiconductive ZnO powder having an average particle diameter of 8 $\mu$m. Then, 59 g of ZnO powder thus obtained, 4.0 g of magnesium acetate [Mg(C$_2$H$_3$O$_2$)$_2$•4H$_2$O], and 8.7 g of isopropyl titanate [Ti(OC$_3$H$_7$)$_4$] were weighed out so that the proportions of Mg(C$_2$H$_3$O$_2$)$_2$•4H$_2$O and Ti(OC$_3$H$_7$)$_4$ were respectively 3 mol% and 5 mol% based on 1 mol of ZnO, and dissolved in 300 cm$^3$ of ethanol to prepare an ethanol solution. The ethanol solution was subjected to wet mixing a ball mill for 10 hr. The resulting mixture was boiled to dryness in a stainless steel vessel to obtain powder. The powder thus obtained was observed with a scanning transmission electron microscope. As a result, it was found that fine particles having a diameter of about 0.05 $\mu$m were deposited around the ZnO powder. A sinter was prepared from this powder in the same manner as that of EXAMPLE 1, except that the firing was conducted at 1300°C. An elementary composition of the sinter thus obtained was examined in the same manner as that of EXAMPLE 1. As a result, it was found that the sinter comprised grains each composed of a main phase of ZnO and a composite phase composed of (Zn, Mg)TiO$_3$ and surrounding the main phase, and grain boundary phases present between these grains.

Thereafter, both surfaces of the sinter were coated with a silver paste, followed by baking, thereby preparing a semiconductor ceramic of grain boundary insulation type. The specific inductive capcity, $\epsilon$s, etc, of the semiconductor ceramic was measured in the same manner as that of EXAMPLE 1. The results are shown in the following table.

EXAMPLE 4

4

50 g of ZnO powder having an average particle diameter of 8μm which had been prepared in the same manner as that of EXAMPLE 3, 1.8 g of magnesium chloride (MgCℓ₂), and 5.8 g of titanium tetrachloride (TiCℓ₄) were weighed out so that the proportions of MgCℓ₂ and TiCℓ₄ were respectively 3 mol% and 5 mol% based on 1 mol of ZnO, and dissolved in 300 cm³ of water to prepare an aqueous solution. The aqueous solution was subjected to wet mixing in a ball mill for 10 hr, followed by spray drying with a spray dryer, thereby obtaining a powder. The powder thus obtained was observed with a scanning electron microscope. As a result, it was found that fine particles having a diameter of about 0.01 μm were deposited around the ZnO powder. Then, the powder was fired in the same manner as that of EXAMPLE 3 to obtain a sinter, followed by examination of an elementary composition of the sinter. As a result, it was found that the sinter comprised grains each composed of a main phase of ZnO and a composite phase composed of (Zn, Mg)TiO₃ and surrounding the main phase, and grain boundary phases present between these grains.

Thereafter, a semiconductor of grain boundary insulation type was prepared in the same manner as that of EXAMPLE 3 and subjected to the measurement of specific inductive capacity, $\epsilon$s, etc. The results are shown in the following table.

COMPARATIVE EXAMPLE 2

50 g of ZnO powder having an average particle diameter of 8 μm which had been prepared in the same manner as that of EXAMPLE 3, 0.7 g of magnesium oxide (MgO) having an average particle diameter of 0.7 μm, and 2.5 g of titanium oxide (TiO₂) having an average particle diameter of 0.3 μm were weighed out so that the proportions of MgO and TiO₂ were respectively 3 mol% and 5 mol% based on 1 mol of ZnO, and subjected to wet mixing in a ball mill for 15 hr. The resulting mixture was dried to obtain a powder. Then, the powder was fired in the same manner as that of EXAMPLE 3 to obtain a sinter, followed by examination of an elementary composition of the sinter. As a result, it was found that the sinter comprised grains each having a single phase structure comprising a homogeneous solid solution composed of ZnO, MgO, and TiO₂, and grain boundary phases present between these grains.

Thereafter, in the same manner as that of EXAMPLE 3 both surfaces of the sinter were coated with silver by baking to prepare a sample. The sample was subjected to the measurement of specific inductive capacity, $\epsilon$s, etc. The results are shown in the following table.

Table

| | Composition | εs 25°C 1 kHz | tanδ 25°C 1 kHz | IR (MΩ) | Rate of change in C with temp. (%) |
|---|---|---|---|---|---|
| Ex. 1 | main phase: BaTiO$_3$<br>composite phase: (Ba, Sr)TiO$_3$ | 3900 | 1.8 | $3 \times 10^5$ | +13<br>-14 |
| Ex. 2 | main phase: BaTiO$_3$<br>composite phase: (Ba, Sr)TiO$_3$ | 4400 | 2.3 | $2 \times 10^5$ | + 8<br>-11 |
| Comp. Ex. 1 | (Ba, Sr)TiO$_3$ | 1600 | 2.4 | $2 \times 10^5$ | +52<br>-24 |
| Ex. 3 | main phase: ZnO<br>composite phase: (Zn, Mg)TiO$_3$ | 1300 | 0.8 | $8 \times 10^3$ | + 1.6<br>- 1.4 |
| Ex. 4 | main phase: ZnO<br>composite phase: (Zn, Mg)TiO$_3$ | 1400 | 1.1 | $7 \times 10^3$ | + 1.8<br>- 1.6 |
| Comp. Ex. 2 | single phase structure comprising a homogeneous solid solution of ZnO, MgO, and TiO$_2$ | immeasurable because of semiconductor | | | |

As can be seen from the table, the dielectric ceramics and semiconductor ceramics of grain boundary insulation type each for use in capacitors prepared in EXAMPLE 1 to 4 had excellent various characteristics suitable for use in capacitors.

(Effect of the Invention)

EP 0 270 098 B1

As is apparent from the foregoing description, according to the present invention, a ceramic for use in electronic components comprising grains each having a double phase structure composed of a main phase and a composite phase surrounding the main phase can be very easily prepared by dispersing a metallic oxide powder in a solution of a metal salt containing a metallic element component different from the component of said metallic oxide powder to deposit said metallic element component on the surface of said metallic oxide, molding said metallic oxide having said metallic element component deposited on the surface thereof into a desired shape, and firing the resulting molding.

4. Brief Description of the Drawing:

The drawing is a schematic view of a crystalline structure of a ceramic for use in electronic components prepared according to the present invention.
1...polycrystal, 2...grain, 3...main phase, 4...composite phase, 5...grain boundary phase

**Claims**

**1.** A process for manufacturing ceramics for use in electronic components, said ceramics comprising a polycrystalline substance in which each of grains (2) constituting said polycrystalline substance comprises a main phase (3) and a composite phase (4) surrounding said main phase (3) and composed of a component of said main phase (3) and a component other than that of said main phase (3), characterized in that a metallic oxide powder is dispersed in a solution of a metal salt containing a metallic element component different from the component of said metallic oxide powder to deposit said metallic element component on the surface of said metallic oxide, and said metallic oxide having said metallic element component deposited on the surface thereof is then molded into a desired shape and thereafter fired.

**Revendications**

**1.** Procédé de fabrication de céramiques utilisables dans des composants électroniques, lesdites céramiques comprenant une substance polycristalline dans laquelle chacun des grains (2) constituant ladite substance polycristalline comprend une phase principale (3) et une phase composite (4) entourant ladite phase principale et composée d'un composant de ladite phase principale (3) et d'un composant autre que celui de ladite phase principale (3), caractérisé en ce qu'une poudre d'oxyde métallique est dispersée dans une solution d'un sel de métal contenant un composant à base d'un élément métallique différent du composant à ladite poudre d'oxyde métallique pour déposer ledit composant à base d'élément métallique sur la surface dudit oxyde métallique, et ledit oxyde métallique ayant ledit composant à base d'élément métallique déposé sur la surface dudit oxyde métallique est ensuite moulé à la forme souhaité puis calciné.

**Patentansprüche**

**1.** Ein Verfahren zum Herstellen von Keramik zur Verwendung in elektronischen Teilen, wobei die Keramik eine polykristalline Substanz umfaßt, in der jedes der die polykristalline Substanz bildenden Körner (2) eine Hauptphase (3) und eine Compositephase (4) umfaßt, die die Hauptphase (3) umgibt und aus einer Komponente der Hauptphase (3) sowie einer anderen Komponente als diejenige der Hauptphase (3) besteht, dadurch gekennzeichnet, daß ein Metalloxydpulver in einer Lösung eines Metallsalzes dispergiert wird, das eine von der Metalloxydpulver-Komponente unterschiedliche Metallelement-Komponente enthält, um die Metallelement-Komponente an der Oberfläche des Metalloxyds abzulagern, und das Metalloxyd, auf dessen Oberfläche die Metallelement-Komponente abgelagert wird, dann zu einer gewünschten Form geformt und anschließend gebrannt wird.

7